# EUROPEAN PATENT SPECIFICATION

(11) **EP 1 183 169 B1**
(45) Date of publication and mention of the grant of the patent: **11.08.2004**
(21) Application number: 00932090.4
(22) Date of filing: 04.05.2000
(51) Int. Cl.: B60R 21/16

(54) **A METHOD OF ASSEMBLING AN AIRBAG MODULE**
VERFAHREN ZUR ZUSAMMENSETZUNG EINES AIRBAGMODULS
PROCEDE D'ASSEMBLAGE D'UN MODULE DE COUSSIN GONFLABLE DE SECURITE

(30) Priority: 06.05.1999 GB 9910431
(43) Date of publication of application: 06.03.2002
(73) Proprietor: Delphi Technologies, Inc., Troy, MI 48007-5052 (US)
(72) Inventor: ZIMMERBEUTEL, Bernd, Uwe, D-42857 Remscheid (DE); NILSON, Hans, Gert, D-36251 Bad Hersfeld (DE); GUTHKE, Detlev, Wilhelm, D-58089 Hagen (DE)
(74) Representative: Denton, Michael John
(86) International application number: PCT/US2000/012273
(87) International publication number: WO 2000/068040

(56) References cited:
- US-A- 5 810 390
- PATENT ABSTRACTS OF JAPAN vol. 1998, no. 13, 30 November 1998 (1998-11-30) & JP 10 203289 A (TOYODA GOSEI CO LTD;TOYOTA MOTOR CORP), 4 August 1998 (1998-08-04)
- PATENT ABSTRACTS OF JAPAN vol. 1998, no. 13, 30 November 1998 (1998-11-30) & JP 10 203288 A (TOYO TIRE &RUBBER CO LTD), 4 August 1998 (1998-08-04)
- PATENT ABSTRACTS OF JAPAN vol. 1998, no. 10, 31 August 1998 (1998-08-31) & JP 10 138861 A (TOYOTA MOTOR CORP), 26 May 1998 (1998-05-26)

## Description

### Technical Field

The present invention relates to a method of assembling an airbag module in which the airbag has an extended or longitudinally extending shape, and an airbag module assembled by such a method.

### Background of the Invention

Extended or longitudinally extending airbags are known, and are sometimes referred to as side curtains or side airbags. Such airbags can be mounted in the roof or door of a motor vehicle adjacent the side of an occupant seat, in general to provide protection for an occupant during a side impact on the vehicle. Assembly of such known airbag modules is both time-consuming and costly. US-A-5810390 describes a method and a module in accordance with the preamble of Claims 1 and 6.

### Summary of the Invention

It is an object of the present invention to overcome the above mentioned disadvantages.

A method of assembling an airbag module in accordance with the present invention comprises the steps of securing a longitudinally extending structural member inside an airbag having an extended profile to form a sub-assembly of the structural member and the airbag; drawing the sub-assembly through an open end of a longitudinally extending tubular housing; and continuing with the drawing step until the airbag is surrounded by the housing along at least part of the length of the airbag.

The present invention also includes an airbag module comprising an airbag having an extended profile; a longitudinally extending structural member secured in positioned inside the airbag; and a longitudinally extending tubular housing having a longitudinally extending tear-line and surrounding the sub-assembly of structural member and airbag along at least part of the length of the airbag.

The present invention provides a method of assembly with is easier and cheaper than previously known arrangements for airbag modules having an airbag with an extended profile; and also provides an airbag module which is minimal in size.

### Brief Description of the Drawings

The present invention will now be described, by way of example, with reference to the accompanying drawings, in which:-
Figure 1 is a side view of a first step in the assembly of an airbag module in accordance with the present invention using a method in accordance with the present invention;
Figure 2 is a side view of a second step in the assembly process of Figure 1;
Figure 3 is a side view of a third step in the assembly process of Figure 1;
Figure 4 is a cross-sectional view on the line IV-IV of Figure 3; and
Figures 5 to 7 are cross-sectional views similar to that of Figure 4 of alternative embodiments of airbag module in accordance with the present invention.

### Description of the Preferred Embodiment

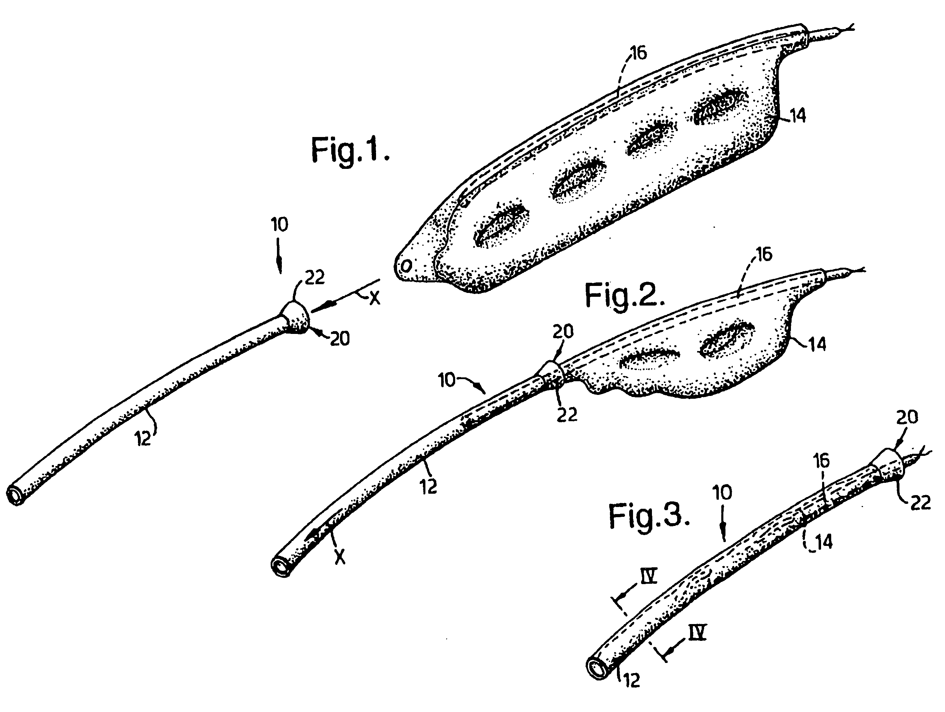

Referring to Figures 1 to 4, the airbag module 10 in accordance with the present invention comprises a longitudinally extending tubular housing 12; an airbag or cushion 14 having an extended profile; and a longitudinally extending structural member 16. The structural member 16 is positioned inside the airbag 14. The structural member 16 may be a gas lance or gas diffuser tube which is connected to an inflator (not shown) for the flow of inflation gas from the inflator into the airbag 14 during deployment of the airbag. In the latter case, the inflator may be secured to the structural member 16 at the position where the structural member enters the airbag 14. The tubular housing 12 has a longitudinally extending weakened section or tear-line 18 which splits during deployment of the airbag 14; and is open at one end 20.

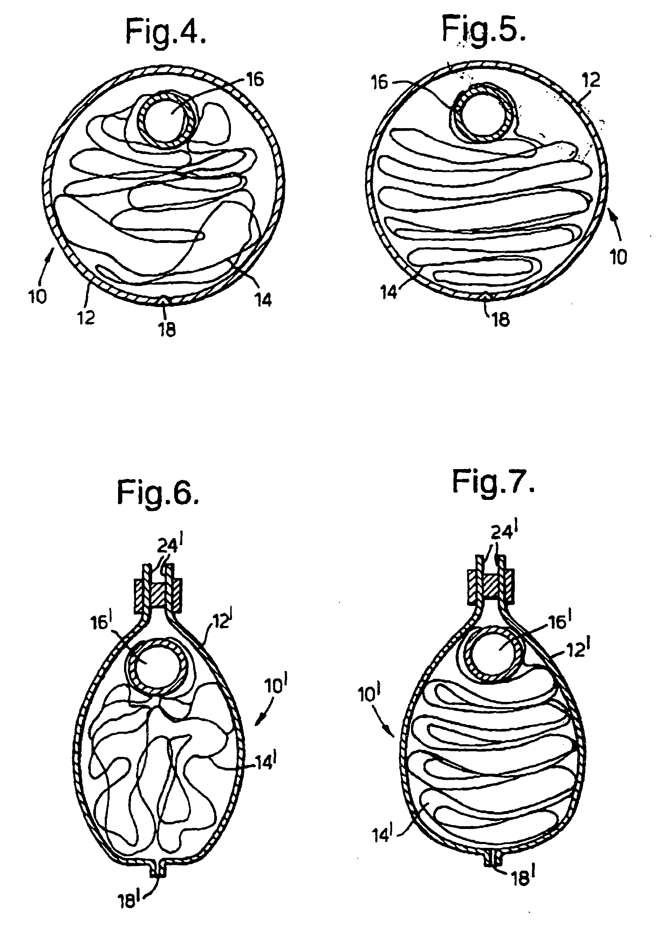

The method of assembling the airbag module 10 in accordance with the present invention comprises securing the structural member 16 inside the airbag 14 by any suitable method to form a sub-assembly; and then pushing the sub-assembly in the longitudinal direction X into the tubular housing 12 through the open end 20 thereof, as shown in Figure 1. The step of pushing the sub-assembly in the longitudinal direction X is continued (Figure 2) until the airbag 14 is at least partially (and preferably fully) positioned inside the tubular housing 12 (Figure 3). The structural member 16 provides support for the airbag 14 during installation of the airbag into the tubular housing 12. With this process, as shown in Figure 4, the airbag 14 has an irregular fold pattern when positioned inside the tubular housing 12. In an alternative arrangement, the airbag 14 may be folded into a predetermined regular pattern (as shown in Figure 5) either prior to pushing the sub-assembly of structural member 16 and airbag into the tubular housing 12, or whilst the sub-assembly is being pushed into position.

A funnel-shaped member 22 or similar device may be positioned at the open end 20 of the tubular housing 12 to assist in the insertion of the sub-assembly of structural member 16 and airbag 14. The funnel-shaped member may be specially shaped to fold the airbag into the predetermined regular pattern during the insertion process. After assembly, the airbag 14 may be secured to the tubular housing 12 in any suitable manner.

The tubular housing 12 may be moulded or extruded from plastics material. Alternatively, the tubular housing may be formed from fabric, shrink foil, or any other suitable material, which can be sewn or formed as a tubular housing. As shown in the alternative embodiments of airbag module 10' in Figures 6 and 7, where the airbag 14' has an irregular fold and a regular fold respectively, the tubular housing 12' is formed from fabric material which is joined along longitudinally extending edges 24' on the opposite side to the tear-line 18'. The tubular housing may contain separate shape maintaining elements (not shown). In a further alternative arrangement, the tubular housing 12 may be defined by a number of substantially axially aligned tubular members which either totally surround the sub-assembly of airbag 14 and structural member 16, or partially surround the sub-assembly along at least part of the length of the airbag.

In the above described process, the structural member 16 is used for pushing the airbag 14 into the tubular housing 12. It will be appreciated that by using an alternative designed of structural member, the structural member could be used for pulling the airbag into the tubular housing.

The present invention provides an airbag module 10,10' which is easy and cheap to assemble, and which has a minimal size.

## Claims

1. A method of assembling an airbag module (10) comprising the steps of securing a longitudinally extending structural member (16) inside an airbag (14) having an extended profile to form a sub-assembly of the structural member and the airbag; **characterized by** drawing the sub-assembly through an open end (20) of a longitudinally extending tubular housing (12); and continuing with the drawing step until the airbag (14) is surrounded by the housing along at least part of the length of the airbag.

2. A method as claimed in Claim 1, further comprising the step of folding the airbag (14) into a predetermined pattern either prior to, or during, the drawing step.

3. A method as claimed in Claim 1 or Claim 2, wherein the drawing step comprises pushing the sub-assembly of the structural member (16) and the airbag (14) into the tubular housing (12) through the open end (20) thereof.

4. A method as claimed in any one of Claims 1 to 3, further comprising placing a funnel shaped member (22) at the open end (20) of the tubular housing (12) prior to the drawing step.

5. A method as claimed in Claim 2, further comprising placing a funnel shaped member (22) at the open end (20) of the tubular housing (12) prior to the drawing step, wherein the funnel shaped member is shaped to fold the airbag into the predetermined pattern during the drawing step.

6. An airbag module (10) comprising an airbag (14) having an extended profile; and a longitudinally extending structural member (16) secured in position inside the airbag; **characterized by** a longitudinally extending tubular housing (12) having a longitudinally extending tear-line (18) and surrounding the sub-assembly of structural member and airbag along at least part of the length of the airbag.

7. An airbag module as claimed in Claim 6, wherein the structural member (16) is a gas tube for delivering inflation gas to the airbag (14) during deployment of the airbag.

8. An airbag module as claimed in Claim 6 or Claim 7, wherein the airbag (14) has an irregular fold pattern.

9. An airbag module as claimed in any one of Claims 6 to 8, wherein the airbag (14) is secured to the tubular housing (12).

10. An airbag module as claimed in any one of Claims 6 to 9, wherein the tubular housing (12) has been moulded or extruded from plastics material.

11. An airbag module as claimed in any one of Claims 6 to 9, wherein the tubular housing (12) is formed from fabric material or shrink foil.

12. An airbag module as claimed in any one of Claims 6 to 11, wherein the tubular housing (12) is defined by a number of tubular members which are substantially axially aligned.

## Patentansprüche

1. Verfahren zum Zusammenbauen eines Airbagmoduls (10) mit den Schritten, dass ein sich längs erstreckendes Bauelement (16) in einem Airbag (14), der ein längliches Profil besitzt, angebracht wird, um eine Baugruppe aus dem Bauelement und dem Airbag zu bilden,
**dadurch gekennzeichnet,**
**dass** die Baugruppe durch ein offenes Ende (20) eines sich längs erstreckenden rohrförmigen Gehäuses (12) gezogen wird; und das Ziehen fortgesetzt wird, bis der Airbag (14) von dem Gehäuse entlang zumindest eines Teils der Länge des Airbags umgeben ist.

2. Verfahren nach Anspruch 1,
ferner mit dem Schritt, dass der Airbag (14) entweder vor oder während des Ziehens in ein vorbestimmtes Muster gefaltet wird.

3. Verfahren nach Anspruch 1 oder 2,
wobei der Schritt zum Ziehen umfasst, dass die Baugruppe aus Bauelement (16) und Airbag (14) in das rohrförmige Gehäuse (12) durch sein offenes Ende (20) gedrückt wird.

4. Verfahren nach einem der Ansprüche 1 bis 3,
ferner umfassend, dass ein trichterförmiges Element (22) an dem offenen Ende (20) des rohrförmigen Gehäuses (12) vor dem Schritt zum Ziehen angeordnet wird.

5. Verfahren nach Anspruch 2,
ferner umfassend, dass ein trichterförmiges Element (22) an dem offenen Ende (20) des rohrförmigen Gehäuses (12) vor dem Schritt zum Ziehen angeordnet wird, wobei das trichterförmige Element so geformt ist, dass der Airbag während des Schritts zum Ziehen in das vorbestimmte Muster gefaltet wird.

6. Airbagmodul (10) mit einem Airbag (14), der ein längliches Profil aufweist, und einem sich längs erstreckenden Bauelement (16), das in dem Airbag in Position angebracht ist,
**gekennzeichnet durch**
ein sich längs erstreckendes rohrförmiges Gehäuse (12) mit einer sich längs erstreckenden Reißlinie (18), das die Baugruppe aus Bauelement und Airbag entlang zumindest eines Teils der Länge des Airbags umgibt.

7. Airbagmodul nach Anspruch 6,
wobei das Bauelement (16) ein Gasrohr ist, um Gas zum Aufblasen an den Airbag (14) während der Entfaltung des Airbags zu liefern.

8. Airbagmodul nach einem der Ansprüche 6 oder 7,
wobei der Airbag (14) ein unregelmäßiges Faltmuster besitzt.

9. Airbagmodul nach einem der Ansprüche 6 bis 8,
wobei der Airbag (14) an dem rohrförmigen Gehäuse (12) angebracht ist.

10. Airbagmodul nach einem der Ansprüche 6 bis 9,
wobei das rohrförmige Gehäuse (12) aus Kunststoffmaterial geformt oder extrudiert worden ist.

11. Airbagmodul nach einem der Ansprüche 6 bis 9,
wobei das rohrförmige Gehäuse (12) aus Gewebematerial oder Schrumpffolie gebildet ist.

12. Airbagmodul nach einem der Ansprüche 6 bis 11,
wobei das rohrförmige Gehäuse (12) durch eine Anzahl rohrförmiger Elemente definiert ist, die im Wesentlichen axial ausgerichtet sind.

## Revendications

1. Procédé d'assemblage d'un module de coussin gonflage de sécurité (10) comprenant les étapes consistant à fixer un élément structurel s'étendant longitudinalement (16) à l'intérieur d'un coussin gonflable de sécurité (14) ayant un profil allongé pour former un sous-ensemble de l'élément structurel et du coussin gonflable de sécurité ; **caractérisé par** les étapes consistant à tirer le sous-ensemble à travers une extrémité ouverte (20) d'un logement tubulaire s'étendant longitudinalement (12) ; et à continuer l'étape de traction jusqu'à ce que le coussin gonflable de sécurité (14) soit entouré par le logement le long d'au moins une partie de la longueur du coussin gonflable de sécurité.

2. Procédé selon la revendication 1, comprenant en outre l'étape consistant à plier le coussin gonflable de sécurité (14) dans une configuration prédéterminée soit avant soit pendant l'étape de traction.

3. Procédé selon la revendication 1 ou 2, dans lequel l'étape de traction comprend le poussage du sous-ensemble de l'élément structurel (16) et du coussin gonflable de sécurité (14) dans un logement tubulaire (12) à travers l'extrémité ouverte (20) de celui-ci.

4. Procédé selon l'une quelconque des revendications 1 à 3, comprenant en outre l'étape consistant à placer un élément en forme d'entonnoir (22) au niveau de l'extrémité ouverte (20) du logement tubulaire (12) avant l'étape de traction.

5. Procédé selon la revendication 2, comprenant en en outre l'étape consistant à placer un élément en forme d'entonnoir (22) au niveau de l'extrémité ouverte (20) du logement tubulaire (12) avant l'étape de traction, dans lequel l'élément en forme d'entonnoir est formé pour plier le coussin gonflable de sécurité dans une configuration prédéterminée pendant l'étape de traction.

6. Module de coussin gonflable de sécurité (10) comprenant un coussin gonflable de sécurité (14) ayant un profil allongé et un élément structurel s'étendant longitudinalement (16) fixé en place à l'intérieur du coussin gonflable de sécurité ; **caractérisé par** un logement tubulaire s'étendant longitudinalement (12) ayant une ligne de perforations s'étendant longitudinalement (18) et entourant le sous-ensemble de l'élément structurel et le coussin gonflable de sécurité le long d'au moins une partie de la longueur du coussin gonflable de sécurité.

7. Module de coussin gonflable de sécurité selon la revendication 6, dans lequel l'élément structurel (16) est un tube à gaz pour insuffler du gaz dans le coussin gonflable de sécurité (14) lors du déploiement du coussin gonflable de sécurité.

8. Module de coussin gonflable de sécurité selon la revendication 6 ou 7, dans lequel le coussin gonflable de sécurité (14) a une configuration de pliage irrégulière.

9. Module de coussin gonflable de sécurité selon l'une quelconque des revendications 6 à 8, dans lequel le coussin gonflable de sécurité (14) est fixé au logement tubulaire (12).

10. Module de coussin gonflable de sécurité selon l'une quelconque des revendications 6 à 9, dans lequel le logement tubulaire (12) a été moulé ou extrudé à partir d'un matériau plastique.

11. Module de coussin gonflable de sécurité selon l'une quelconque des revendications 6 à 9, dans lequel le logement tubulaire (12) est formé dans un matériau en tissu ou un support rétrécissable.

12. Module de coussin gonflable de sécurité selon l'une quelconque des revendications 6 à 11, dans lequel le logement tubulaire (12) est défini par plusieurs éléments tubulaires qui sont alignés sensiblement de façon axiale.
